# EUROPEAN PATENT APPLICATION

(11) **EP 4 005 721 A1**
(43) Date of publication of application: **01.06.2022**
(21) Application number: 20866435.9
(22) Date of filing: 20.08.2020
(51) Int. Cl.: B23K 9/007, B23K 9/23, B23K 11/11, B23K 26/21, F16B 5/04, F16B 5/08

(54) **JOINING METHOD AND JOINED BODY**

(30) Priority: 18.09.2019 JP 2019169544
(71) Applicant: KABUSHIKI KAISHA KOBE SEIKO SHO (KOBE STEEL, LTD.), Hyogo 651-8585 (JP)
(72) Inventor: HASHIMURA, Toru, Hyogo 651-2271 (JP); IHARA, Ryohei, Hyogo 651-2271 (JP); YAMAKAWA, Taiki, Hyogo 651-2271 (JP)
(74) Representative: TBK
(86) International application number: PCT/JP2020/031481
(87) International publication number: WO 2021/054032

(57) **Abstract**

A joining method for overlapping and joining a plate-shaped portion of a first metal member 2 and a plate-shaped portion of a second metal member 3, where the first metal member 2 and the second metal member 3 are made of dissimilar materials, includes a first step of forming an insertion hole in each of the plate-shaped portion of the first metal member 2 and the plate-shaped portion of the second metal member 3, where the insertion holes communicate with each other when the plate-shaped portions of the first metal member 2 and the second metal member 3 are overlapped with each other, a second step of disposing a first joining member 4 made of a metal material on a side of the plate-shaped portion of the first metal member 2 opposite to the second metal member 3, a third step of inserting a second joining member 5 made of the same metal material as that of the first joining member 4 into the first metal member 2 from a side of the second metal member 3 through the insertion holes while the plate-shaped portions of the first metal member 2 and the second metal member 3 are overlapped with each other, and a fourth step of welding the first joining member 4 and the second joining member 5 and joining the first metal member 2 and the second metal member 3 through the first joining member 4 and the second joining member 5.

## Description

### TECHNICAL FIELD

The present invention relates to a joining method and a joined body.

### BACKGROUND ART

Conventionally, the following joining methods have been used for joining vehicle body members formed of dissimilar materials. Specifically, a joining method using Flow Drilling Screw (FDS) or Self Piercing Rivets (SPR) has been used for joining an aluminum side member and a steel frame member (see, for example, Patent Documents 1 and 2). FDS is a joining method for, by using screws as auxiliary materials, mechanically fastening overlapped members to be joined that are softened by frictional heat generated under insertion of the screws rotating at a high speed from above the members to be joined. SPR is a joining method for fastening overlapped members to be joined by pressing rivets from above them to cause the rivets to penetrate the member to be joined on the upper side and cause the rivets to expand their tip diameters in the member to be joined on the lower side.

However, both FDS and SPR use joining members (screws or rivets) having a special shape. Special equipment investment is also made for using these joining methods. Therefore, it is expensive to use these joining methods as a whole. Further, there is a demand for a joining method in which sufficient joint strength is achieved even when the number of joining members is reduced.

### PRIOR ART DOCUMENT

### PATENT DOCUMENT

Patent Document 1: JP 2019-120346 A
Patent Document 2: JP 2013-2505 A

### SUMMARY OT THE INVENTION

### PROBLEMS TO BE SOLVED BY THE INVENTION

It is an object of the present invention to provide a joining method and a joined body that can achieve sufficient joint strength even with a simple and inexpensive configuration.

### MEANS FOR SOLVING THE PROBLEMS

As means for solving the problems described above, the present invention provides a joining method for overlapping and joining a plate-shaped portion of a first metal member and a plate-shaped portion of a second metal member, the first metal member and the second metal member being made of dissimilar materials. The joining method includes: a first step of forming an insertion hole in each of the plate-shaped portion of the first metal member and the plate-shaped portion of the second metal member, the insertion holes communicating with each other when the plate-shaped portions of the first metal member and the second metal member are overlapped with each other; a second step of disposing a first joining member made of a metal material on a side of the plate-shaped portion of the first metal member opposite to the second metal member; a third step of inserting a second joining member made of the same metal material as that of the first joining member into the first metal member from a side of the second metal member through the insertion holes while the plate-shaped portions of the first metal member and the second metal member are overlapped with each other; and a fourth step of welding the first joining member and the second joining member and joining the first metal member and the second metal member through the first joining member and the second joining member.

According to this, joining of the first metal member and the second metal member that are made of dissimilar materials can be completed by holding them in a sandwiching manner with the first joining member and the second joining member that are made of the same metal material and then welding the first joining member and the second joining member. Accordingly, it is unnecessary to form joining members with a special configuration, and it is only necessary to provide equipment for welding the joining members, thus enabling low-cost fabrication. Further, since the same metal materials are welded, sufficient joint strength can be achieved, which leads to obtaining desired reliability.

Preferably, the second joining member has a through-hole extending from the side of the second metal member to the first joining member, and in the fourth step, the first joining member and the second joining member are welded through the through-hole.

According to this, through the through-hole formed in the second joining member, a portion of abutment of the first joining member and the second joining member can be directly accessed. Therefore, the portion of the abutment can be firmly joined at low cost by arc welding through the through-hole.

Preferably, the second joining member has a protrusion that is inserted through the insertion holes, and in the fourth step, while abutment of the protrusion on the first joining member is made, a portion of the abutment is welded.

According to this, since the second joining member is provided with the protrusion, the second joining member can abut the first joining member without forming a through-hole in the second joining member. Therefore, the portion of the abutment of the first joining member and the second joining member can be firmly joined at low cost by spot welding.

Preferably, the first joining member has a plate shape, and the first metal member includes a guide rib capable of holding the first joining member, and in the second step, the first joining member is held by the guide rib.

According to this, the first joining member having a plate shape can be held by the guide rib such that the first joining member does not easily fall off.

Preferably, the first joining member is a hollow, cylindrical member that is joined to the first metal member in advance, and the second joining member includes a shaft portion that is inserted through a center hole of the first joining member and a head portion that is larger than cross-sectional shapes of the insertion holes.

According to this, it is unnecessary to dispose the first joining member, thus improving working efficiency.

Preferably, the first metal member is made of aluminum, and the second metal member, the first joining member, and the second joining member are made of steel.

According to this, it is achievable in a simple and inexpensive manner to join a frame structure in which the inside is made of aluminum and the outside is made of steel.

The first metal member may be formed in a closed cross-sectional shape.

According to this, even when the first metal member has a closed cross-sectional shape, the second metal member can be joined using the first joining member and the second joining member.

The first metal member and the second metal member may be vehicle body members.

The vehicle body members may include a side member.

As means for solving the problems described above, the present invention provides a joined body that includes: a first metal member and a second metal member that are made of dissimilar materials and have plate-shaped portions overlapped with each other, the plate-shaped portions each having an insertion hole formed in each of the plate-shaped portions, the insertion holes communicating with each other when the plate-shaped portions of the first metal member and the second metal member are overlapped with each other; a first joining member that is made of a metal material and is disposed on a side of the plate-shaped portion of the first metal member opposite to the second metal member; and a second joining member that is made of the same metal material as that of the first joining member and is inserted into the first metal member from a side of the second metal member through the insertion holes while the plate-shaped portions of the first metal member and the second metal member are overlapped with each other. The joined body is formed by welding the first joining member and the second joining member and joining the first metal member and the second metal member through the first joining member and the second joining member.

### EFFECT OF THE INVENTION

According to the present invention, the first metal member and the second metal member that are made of dissimilar materials are joined by holding them in a sandwiching manner with the first joining member and the second joining member that are made of the same metal material and then welding the first joining member and the second joining member. Thus, without special equipment investment, a joined body having desired joint strength can be obtained in a simple and inexpensive manner.

### BRIEF DESCRIPTION OF THE DRAWINGS

Fig. 1 is a schematic view illustrating a joined body according to the present embodiment;
Fig. 2 is a cross-sectional view taken along line A-A of Fig. 1;
Fig. 3 is a partially enlarged view illustrating a joining portion in Fig. 2;
Fig. 4 is a cross-sectional view illustrating a joining portion according to another embodiment;
Fig. 5 is a cross-sectional view illustrating a joining portion according to another embodiment; and
Fig. 6 is a cross-sectional view illustrating a joining portion according to another embodiment.

### DESCRIPTION OF EMBODIMENTS

Hereinafter, embodiments according to the present invention will be described with reference to the accompanying drawings. Note that the following description is merely exemplary in nature, and is not intended to limit the present invention, its applications, or its uses. In addition, the drawings are schematic, and ratios of dimensions and the like are different from actual ones.

### (First Embodiment)

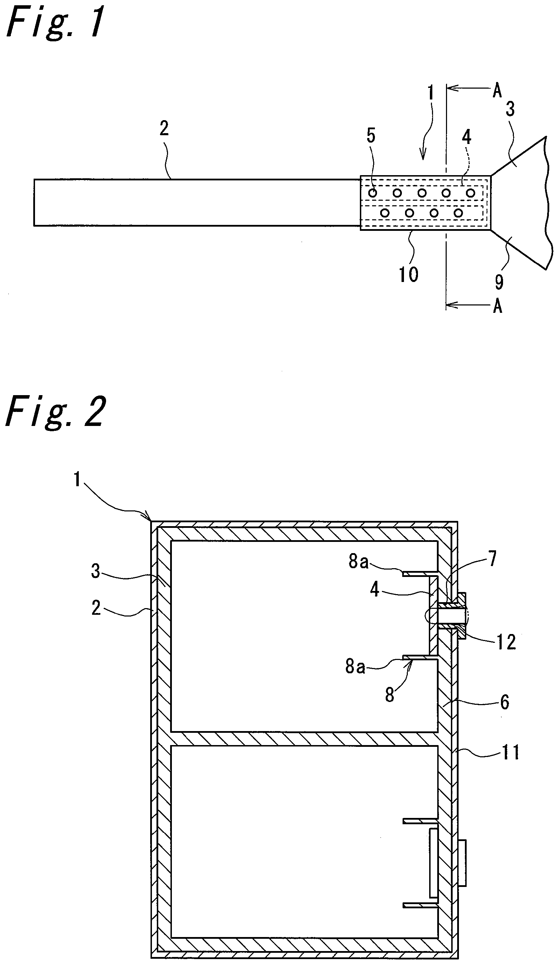

Fig. 1 illustrates a joined body 1 fabricated by a joining method according to a first embodiment. Applications of the joined body 1 are not limited, but examples thereof include a case where a vehicle body member, particularly a front side member of a vehicle, is joined to a chassis.

The joined body 1 is formed by joining and integrating a first metal member 2 and a second metal member 3 through first joining members 4 and second joining members 5 (arc rivets).

The first metal member 2 is made of aluminum or an aluminum alloy (6000-series aluminum alloy based extruded material in this embodiment). The first metal member 2 is formed in a closed cross-sectional shape (rectangular cross-sectional shape in this embodiment), and thus has a hollow, tube shape. In Fig. 2, an internal space of the first metal member 2 is vertically divided into two portions by a partition wall 2a. However, the internal space may not be divided, or may be divided into three or more portions. Figs. 1 and 2 illustrate an example in which the first metal member 2 is used as a front side member.

The first metal member 2 has a first joining wall 6, which is one of long side walls that are plate-shaped portions, and on the first joining wall 6, a plurality of first insertion holes 7 is formed at a predetermined interval in a longitudinal direction while being arranged in two upper and lower rows from one end side of the first joining wall 6. A range in which the first insertion holes 7 are formed is a range within a predetermined dimension from the one end side toward the other end side of the first joining wall 6 (range exactly covered with a tube-shaped portion 10 of the second metal member 3, which will be described later). The first insertion holes 7 are formed such that their longitudinal positions in the upper row are shifted by a half pitch compared to the longitudinal positions in the lower row.

The first metal member 2 is used in a state where the first joining wall 6 is disposed substantially along the vertical direction. Accordingly, on the inner surface of the first joining wall 6, guide ribs 8 are formed at respective positions corresponding to the respective first insertion holes 7 so as to temporarily fix the first joining members 4, which will be described later. Each of the guide ribs 8 includes a pair of upper and lower ridges 8a, and thus holds each of the first joining members 4. In an example in Fig. 2, the ridges 8a have a plate shape extending in parallel with each other, but tip portions of the ridges 8a are preferably bent in a direction where the tip portions approach each other. Accordingly, it is possible to reliably prevent the first joining member 4 held by the guide rib 8 from falling off. In addition, reinforcing ribs may be provided on outer surfaces of the ridges 8a to increase rigidity.

The second metal member 3 is made of steel such as high tensile strength steel, and includes a main body portion 9 and the tube-shaped portion 10. The tube-shaped portion 10 is hollow and is formed in a rectangular cross-sectional shape, and is disposed such that one end portion of the first metal member 2 is covered with the tube-shaped portion 10. In this embodiment, the second metal member 3 is a chassis.

The tube-shaped portion 10 has a second joining wall 11, which is a side wall that is a plate-shaped portion, and on the second joining wall 11, a plurality of second insertion holes 12 is formed. The second insertion holes 12 are formed at respective positions corresponding to the respective first insertion holes 7, within an attachment position where the one end portion of the first metal member 2 is covered with the second metal member 3.

The first joining members 4 are made of steel such as high tensile strength steel like the second metal member 3, and are formed in a plate shape. The first joining members 4 are inserted from an opening in the one end side of the first metal member 2, and are held by the guide ribs 8.

The second joining members 5 are made of steel such as high tensile strength steel like the second metal member 3 and the first joining members 4, and each includes a head portion 13 and a shaft portion 14. The head portion 13 is larger than inner diameter dimensions of the first insertion hole 7 and the second insertion hole 12, and also has a dimension sufficient to sandwich and hold, between the first joining member 4 and the head portion 13, the first metal member 2 and the second metal member 3, which will be described later. While the shaft portion 14 abuts the first joining member 4 after being inserted through the first insertion hole 7 and the second insertion hole 12, the head portion 13 abuts an outer surface of the second metal member 3. The second joining member 5 has a through-hole 15 formed in its center and thus has a hollow, cylindrical shape as a whole.

Next, the joining method used for the joined body 1 having the above configuration will be described.

The first insertion holes 7 are formed in the first joining wall 6 of the first metal member 2. In addition, the second insertion holes 12 are formed in the second joining wall 11 of the second metal member 3 (a first step). Positions where the first insertion holes 7 and the second insertion holes 12 are formed are positions within the attachment position where the one end portion of the first metal member 2 is covered with the tube-shaped portion 10 of the second metal member 3 and the first joining wall 6 and the second joining wall 11 are overlapped with each other. These positions are determined to be positions in which the first insertion holes 7 and the second insertion holes 12 communicate with each other.

Each of the first joining members 4 is disposed on the inner surface (surface opposite to the second metal member 3) of the first joining wall 6 of the first metal member 2 (a second step). The first joining member 4 is inserted from the one end side of the first metal member 2, and is held by the guide rib 8 such that the first joining member 4 does not fall off.

While the first joining wall 6 of the first metal member 2 and the second joining wall 11 of the second metal member 3 are overlapped with each other, the shaft portion 14 of the second joining member 5 is inserted through the second insertion hole 12 of the second metal member 3 and the first insertion hole 7 of the first metal member 2 (a third step). When the tip of the shaft portion 14 abuts the first joining member 4, the head portion 13 of the second joining member 5 simultaneously abuts the outer surface of the second metal member 3.

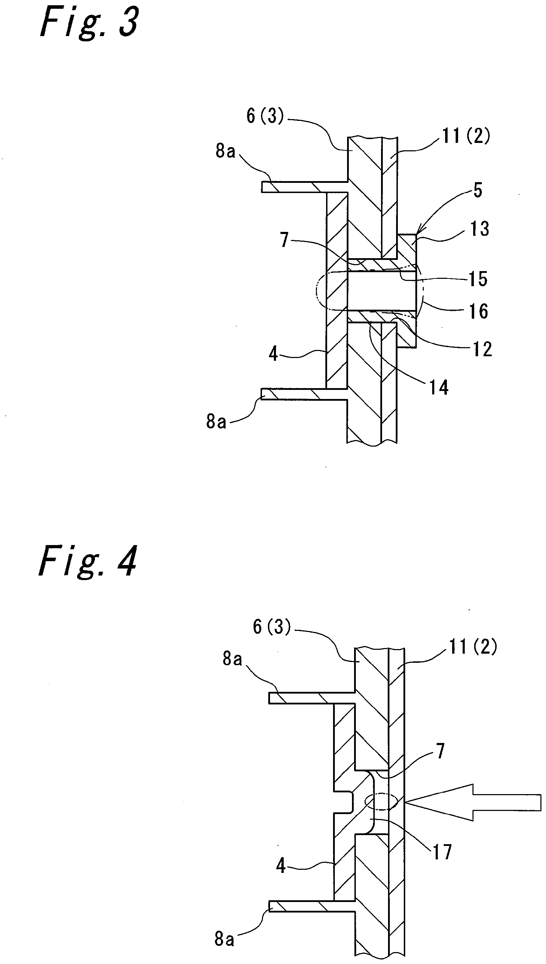

The first joining members 4 and the second joining members 5 are joined by arc welding, which is Element Arc Spot Welding (EASW) in this embodiment. Then, the first metal member 2 and the second metal member 3 are joined through the first joining members 4 and the second joining members 5 (a fourth step). Since the through-hole 15 is formed at the center of the second joining member 5, a welding material 16 (it is indicated by a chain double-dashed line in Fig. 3) melted by an arc welding method is cast into the through-hole 15. As a result, the second joining member 5 made of steel and the first joining member 4 made of the same material are firmly welded. At this time, the second joining member 5 expands radially outward to be in a fitted state with respect to the first metal member 2 and the second metal member 3. Accordingly, the first metal member 2 and the second metal member 3 are firmly positioned. In addition, the welding does neither melt the first metal member 2 made of aluminum nor generate an intermetallic compound. Note that the welding method in the fourth step can be performed in detail by, for example, a method similar to that described in JP 2018-34164 A. Alternatively, the first joining members 4 and the second joining members 5 may be integrated by laser welding.

The joined body 1 is formed through the above steps. Forming the joined body 1 in this manner can yield the following effects.
(1) Arc welding requires no special equipment, and the first joining members 4 and the second joining members 5 are simply configured, thus enabling low-cost fabrication.
(2) Since the first joining members 4 and the second joining members 5, which are made of the same steel material, are welded, a firm joint state can be achieved. Therefore, sufficient strength can be achieved even if the number of joint positions is reduced as compared to conventional joining methods. In addition, using EASW can eliminate a case where the first metal member 2 becomes a compound, and the first metal member 2 and the second metal member 3 can be firmly positioned.

### (Second Embodiment)

Fig. 4 illustrates a joined body 1 fabricated by a joining method according to a second embodiment. The joined body 1 is formed by integrating the first metal member 2 and the second metal member 3 through the first joining members 4 and portions of the second metal member 3. The second joining members 5 are not provided.

Each of the first joining members 4 has a protrusion 17 (dowel) formed at a position corresponding to the first insertion hole 7 of the first metal member 2. A second insertion hole 12 as in the first embodiment is not formed in the second metal member 3.

In the joining method used for the joined body 1 having the above configuration, a first step only includes formation of the first insertion hole 7 in the first metal member 2. In a second step, the first joining member 4 is disposed on the first metal member 2. At this time, the first joining member 4 is temporarily fixed by disposing the protrusion 17 into the first insertion hole 7. In a third step, the second metal member 3 is disposed such that the first insertion hole 7 of the first metal member 2 is covered with the second metal member 3. In a fourth step, the protrusion 17 of the first joining member 4 and the second metal member 3 are spot-welded (a melted portion is indicated by a chain double-dashed line) to join the first metal member 2 and the second metal member 3. In this case, positions where the spot welding is performed are preferably marked on the outer surface of the second metal member 3 in advance. Note that the welding method in the fourth step can be performed in detail by, for example, a method similar to that described in JP 2018-122333 A.

According to the joined body 1 formed by the joining method in accordance with the second embodiment, besides the effects achieved through the first embodiment, it is unnecessary to provide the second joining members 5, which can thus yield effects such as simplification of the configuration by reducing the number of parts and reduction in weight.

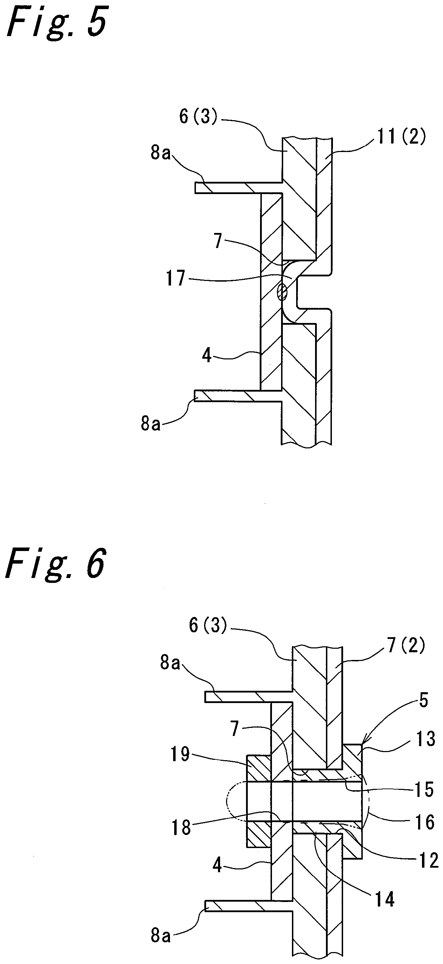

Note that as illustrated in Fig. 5, the protrusion 17 may be formed in the second metal member 3. In this case, the protrusion 17 may be disposed in the first insertion hole 7 of the first metal member 2, and then spot welding may be performed. This can avoid an additional effort to dispose the protrusion 17 in the first insertion hole 7 for temporary fixing of the first joining member 4. In addition, forming the protrusions 17 can clarify positions where spot welding is performed, thus eliminating the need to separately mark the positions. Alternatively, the protrusions 17 may be formed both on the first joining member 4 and the second metal member 3. Further, the protrusion 17 is preferably brought into contact with a portion to be welded from a viewpoint of more reliable joining.

### (Third Embodiment)

Fig. 6 illustrates a joined body 1 fabricated by a joining method according to a third embodiment. The joined body 1 is formed by integrating the first metal member 2 and the second metal member 3 through the first joining members 4 and the second joining members 5. Configurations of the first metal members 2 and the second metal members 3 are like those described in the first embodiment.

The first joining members 4 are made of steel such as high tensile strength steel like the second metal member 3, and are formed in a plate shape. In these points, the first joining members 4 are formed like the ones in the first embodiment, but are different from the ones in the first embodiment in the following points. That is, each of the first joining members 4 has a third insertion hole 18 formed at a position corresponding to the first insertion hole 7 of the first metal member 2 and the second insertion hole 12 of the second metal member 3. While the first joining member 4 is temporarily fixed to the first metal member 2, a cylindrical portion 19 is integrated at a position corresponding to each of the third insertion holes on the inner surface side. In this embodiment, a nut is used as the cylindrical portion 19, and is integrated with the first joining member 4 in advance by welding or the like.

Similarly to the first embodiment, the second joining members 5 are made of steel like the second metal member 3 and the first joining members 4. Each of the second joining members 5 includes a head portion 13 and a shaft portion 14, and has a through-hole 15 formed at the center of the second joining member 5. Note that when the cylindrical portion 19 of the first joining member 4 is formed as a nut, the shaft portion 14 preferably has an external thread formed thereon to enable screwing into the nut.

In the joining method used for the joined body 1 having the above configuration, a first step and a second step are performed as those in the first embodiment. However, in a third step, besides insertion of the shaft portion 14 of the second joining member 5 through the second insertion hole 12 of the second metal member 3 and the first insertion hole 7 of the first metal member 2, the shaft portion 14 is further inserted through the cylindrical portion 19. When the cylindrical portion 19 is formed as a nut, the shaft portion 14 of the second joining member 5 is preferably screwed into the cylindrical portion 19. In a fourth step, the first joining member 4 and the second joining member 5 are welded by EASW similar to that in the first embodiment. In this case, the shaft portion 14 of the second joining member 5 is further inserted through the cylindrical portion 19 of the first joining member 4. This can thus further increase welding strength between the first joining member 4 and the second joining member 5 as compared to the case in the first embodiment.

According to the joined body 1 formed by the joining method in accordance with the third embodiment, the following effects can be further achieved besides the effects yielded through the first embodiment.

Since the shaft portion 14 of the second joining member 5 is welded while being inserted through the cylindrical portion 19 of the first joining member 4, welding strength can be further increased as compared to that in the first embodiment. In particular, when the shaft portion 14 of the second joining member 5 is screwed into the cylindrical portion 19 of the first joining member 4, the first metal member 2 and the second metal member 3 can be firmly sandwiched between and held by the first joining member 4 and the second joining member 5. This is preferable because the first metal member 2 and the second metal member 3 can be firmly joined without a gap.

It should be notedthat the present invention is not limited to the configurations described in the above embodiments, and various modifications can be made.

In the above embodiments, the first joining members 4 are disposed on the first joining wall 6 that is arranged substantially along the vertical direction. However, walls on which the first joining members 4 are disposed are not limited thereto, and the first joining members 4 may be disposed on a bottom wall, for example. When the first joining members 4 are disposed on the bottom wall, the guide ribs 8 are not necessarily required.

In the above embodiments, the case has been described where only the first joining wall 6 and the second joining wall 11 are joined to each other. However, besides this, at least any ones of side walls on the opposite side, bottom walls, or ceiling walls may be also joined. Joining all the walls on the four sides may further increase joint strength.

In the above embodiments, the first metal member 2 has a rectangular cross-sectional shape. However, the cross-sectional shape of the first metal member 2 is not limited thereto, and may be other shapes such as a triangular shape or the like. In addition, the first metal member 2 has a structure closed by the four walls. However, the first metal member 2 may not necessarily have a closed cross-sectional shape and may have a substantially closed cross-sectional shape in which a portion thereof is opened.

### REFERENCE SIGNS LIST

1: Joined body, 2: First metal member, 3: Second metal member, 4: First joining member, 5: Second joining member, 6: First joining wall, 7: First insertion hole, 8: Guide rib, 9: Main body portion, 10: Tube-shaped portion, 11: Second joining wall, 12: Second insertion hole, 13: Head portion, 14: Shaft portion, 15: Through-hole, 16: Welding material, 17: Protrusion, 18: Third insertion hole, 19: Cylindrical portion

## Claims

1. A joining method for overlapping and joining a plate-shaped portion of a first metal member and a plate-shaped portion of a second metal member, the first metal member and the second metal member being made of dissimilar materials, the joining method comprising:
a first step of forming an insertion hole in each of the plate-shaped portion of the first metal member and the plate-shaped portion of the second metal member, the insertion holes communicating with each other when the plate-shaped portions of the first metal member and the second metal member are overlapped with each other;
a second step of disposing a first joining member made of a metal material on a side of the plate-shaped portion of the first metal member opposite to the second metal member;
a third step of inserting a second joining member made of a same metal material as the metal material of the first joining member into the first metal member from a side of the second metal member through the insertion holes while the plate-shaped portions of the first metal member and the second metal member are overlapped with each other; and
a fourth step of welding the first joining member and the second joining member and joining the first metal member and the second metal member through the first joining member and the second joining member.

2. The joining method according to claim 1, wherein
the second joining member has a through-hole extending from the side of the second metal member to the first joining member, and
in the fourth step, the first joining member and the second joining member are welded through the through-hole.

3. The joining method according to claim 1, wherein
the second joining member has a protrusion that is inserted through the insertion holes, and
in the fourth step, while abutment of the protrusion on the first joining member is made, a portion of the abutment is welded.

4. The joining method according to claim 2 or 3, wherein
the first joining member has a plate shape, and the first metal member includes a guide rib capable of holding the first joining member, and
in the second step, the first joining member is held by the guide rib.

5. The joining method according to claim 1, wherein
the first joining member is a hollow, cylindrical member that is joined to the first metal member in advance, and
the second joining member includes a shaft portion that is inserted through a center hole of the first joining member, and a head portion that is larger than a cross-sectional shape of the insertion holes.

6. The joining method according to any one of claims 1 to 3, wherein the first metal member is made of aluminum, and the second metal member, the first joining member, and the second joining member are made of steel.

7. The joining method according to any one of claims 1 to 3, wherein the first metal member is formed in a closed cross-sectional shape.

8. The joining method according to any one of claims 1 to 3, wherein the first metal member and the second metal member are vehicle body members.

9. The joining method according to claim 8, wherein the vehicle body members include a side member.

10. A joined body comprising:
a first metal member and a second metal member that are made of dissimilar materials and have plate-shaped portions overlapped with each other, the plate-shaped portions each having an insertion hole formed in each of the plate-shaped portions, the insertion holes communicating with each other when the plate-shaped portions of the first metal member and the second metal member are overlapped with each other;
a first joining member that is made of a metal material and is disposed on a side of the plate-shaped portion of the first metal member opposite to the second metal member; and
a second joining member that is made of a same metal material as the metal material of the first joining member and is inserted into the first metal member from a side of the second metal member through the insertion holes while the plate-shaped portions of the first metal member and the second metal member are overlapped with each other,
wherein the joined body is formed by welding the first joining member and the second joining member and joining the first metal member and the second metal member through the first joining member and the second joining member.
